# EUROPEAN PATENT SPECIFICATION

(11) **EP 3 601 886 B1**
(45) Date of publication and mention of the grant of the patent: **24.06.2026**
(21) Application number: 18715078.4
(22) Date of filing: 21.03.2018
(51) Int. Cl.: F23D 14/12, F23G 5/32, F23G 5/44, B05B 1/34, F23G 7/06

(54) **NOZZLE**
DÜSE
BUSE

(30) Priority: 27.03.2017 GB 201704853
(43) Date of publication of application: 05.02.2020
(73) Proprietor: Edwards Limited, Burgess Hill, Sussex RH15 9TW (GB)
(72) Inventor: SEELEY, Andrew, Clevedon Somerset BS21 6TH (GB); PRICE, Duncan Michael, Clevedon Somerset BS21 6TH (GB)
(74) Representative: Norton, Ian Andrew
(86) International application number: PCT/GB2018/050744
(87) International publication number: WO 2018/178636

(56) References cited:
- WO-A1-2016/124887
- GB-A- 2 534 124
- GB-A- 2 534 124
- GB-A- 2 540 544
- GB-A- 2 540 544
- GB-A- 2 540 552
- GB-A- 2 540 552
- JP-A- 2002 106 825
- JP-A- 2002 106 825
- JP-A- 2015 038 412
- JP-A- 2015 038 412

## Description

### FIELD OF THE INVENTION

The present invention relates to a nozzle for an abatement apparatus.

### BACKGROUND

Abatement apparatus are known and are typically used for treating an effluent gas stream from a manufacturing processing tool used in, for example, the semiconductor or flat panel display manufacturing industry. During such manufacturing, residual perfluorinated compounds (PFCs) and other compounds exist in the effluent gas stream pumped from the process tool. PFCs are difficult to remove from the effluent gas and their release into the environment is undesirable because they are known to have relatively high greenhouse activity.

Known abatement apparatus use combustion to remove the PFCs and other compounds from the effluent gas stream. Typically, the effluent gas stream is a nitrogen stream containing PFCs and other compounds. A fuel gas is mixed with the effluent gas stream and that gas stream mixture is conveyed into a combustion chamber that is laterally surrounded by the exit surface of a foraminous gas burner. Fuel gas and air are simultaneously supplied to the foraminous burner to affect flameless combustion at the exit surface, with the amount of air passing through the foraminous burner being sufficient to consume not only the fuel gas supply to the burner, but also all the combustibles in the gas stream mixture injected into the combustion chamber.

It is known from GB2540552, GB2534124, JP2002106825A, and JP2015038412A to form a helical gas path in a burner arrangement.

Although techniques exist for processing the effluent gas stream, they each have their own shortcomings. Accordingly, it is desired to provide an improved technique for processing an effluent gas stream.

### SUMMARY

According to the invention, there is provided a nozzle for combustion abatement apparatus operable to treat an effluent stream from a processing tool, the nozzle, formed by a casting process, and comprising: a nozzle body defining a nozzle inlet operable to receive the effluent stream, a nozzle outlet, and a conduit extending between the nozzle inlet and the nozzle outlet and operable to convey the effluent stream in a direction of flow from the nozzle inlet to the nozzle outlet; and an effluent stream rotator configured to impart a rotational component to the effluent stream to rotate the effluent stream around the direction of flow characterised in that said effluent stream rotator comprises an elongate helical protruding structure upstanding from and extending along a surface of said conduit and wherein said conduit has a radius R and said protruding structure has an upstanding height into said conduit of between around 1/16 R and 3/16 R, and typically 1/8 R. The first aspect recognises that a problem with some inlet nozzles is that the destructive rate efficiency of the effluent stream achieved using those nozzles may be lower than desired.

Accordingly, an abatement apparatus nozzle is provided. The abatement apparatus may be one which treats an effluent stream provided by a processing tool. The nozzle is provided with the features as defined in appended claim 1. As defined in the claim, the nozzle comprises an effluent stream rotator. The rotator is configured to impart a rotational or spinning component to the effluent stream. That rotational component may rotate the effluent stream around the direction of flow. In this way, the effluent stream is rotated as it passes through the nozzle body. The destruction rate efficiency achieved by an abatement apparatus when receiving such rotating effluent streams has been found to be significantly improved compared to non-rotating effluent streams.

In one embodiment, the effluent stream rotator is configured to rotate the effluent stream about a flow axis defined by the direction of flow. Accordingly, the effluent stream rotator may rotate the effluent stream circumferentially about an axis extending through the conduit. In other words, the rotation may occur within a plane which is transverse to the axis extending along the conduit.

In one embodiment, the effluent stream rotator is configured to rotate the effluent stream into a vortex. Accordingly, the rotator causes the effluent stream to form a vortex which extends from the nozzle outlet. The axis of the vortex may be generally aligned with the flow axis extending along the conduit.

According to the invention, the protruding structure extends at least partially along the conduit. Accordingly, the protruding structure may be provided on any portion of the conduit.

In one embodiment, the nozzle comprises a plurality of the protruding structures. Accordingly, the structure may have discontinuities and/or multiple structures may be provided. It will be appreciated that the number of protruding structures and the degree to which they occupy the conduit will affect the amount by which the flow of the effluent stream is affected.

In one embodiment, the plurality of the protruding structures define a multi-start thread arrangement.

In one embodiment, the effluent stream rotator comprises at least one secondary inlet located to convey a fluid to impart the rotational component to the effluent stream. Accordingly, an inlet or aperture may be provided through which a fluid passes and interacts with the effluent stream. In particular, the momentum of the fluid may cause a partial change in the direction of flow of the effluent stream to cause it to rotate.

In one embodiment, the secondary inlet is orientated introduce the fluid with a tangential component within the conduit.

In one embodiment, the secondary inlet is orientated introduce the fluid tangentially with respect to the conduit.

In one embodiment, the secondary inlet is orientated introduce the fluid with a direction of flow component within the conduit.

In one embodiment, the nozzle comprises a plurality of the secondary inlets.

In one embodiment, the plurality of the secondary inlets are located circumferentially around the conduit.

In one embodiment, the fluid comprises at least one of the effluent stream and a secondary stream.

Not claimed herein is a method comprising: providing a nozzle for an abatement apparatus operable to treat an effluent stream from a processing tool, the nozzle comprising a nozzle body defining a nozzle inlet operable to receive the effluent stream, a nozzle outlet, and a conduit extending between the nozzle inlet and the nozzle outlet and operable to convey the effluent stream in a direction of flow from the nozzle inlet to the nozzle outlet; and imparting a rotational component to the effluent stream to rotate the effluent stream around the direction of flow using an effluent stream rotator.

In one embodiment, the imparting comprises rotating the effluent stream about a flow axis defined by the direction of flow.

In one embodiment, the imparting comprises rotating the effluent stream into a vortex.

In one embodiment, the method comprises providing a protruding structure upstanding from a surface of the conduit as the effluent stream rotator.

In one embodiment, the protruding structure is elongate and extends along the surface of the conduit.

In one embodiment, the protruding structure is helical.

In one embodiment, the conduit has a radius R and the protruding structure has an upstanding height into the conduit of between around 1/16 R and 3/16 R, and typically 1/8 R.

In one embodiment, the method comprises extending the protruding structure at least partially along the conduit.

In one embodiment, the method comprises providing a plurality of the protruding structures.

In one embodiment, the method comprises providing a multi-start thread arrangement as the plurality of the protruding structures.

In one embodiment, the method comprises providing at least one secondary inlet as the effluent stream rotator and locating the at least one secondary inlet to convey a fluid to impart the rotational component to the effluent stream.

In one embodiment, the method comprises orientating the secondary inlet introduce the fluid with a tangential component within the conduit.

In one embodiment, the method comprises orientating the secondary inlet to introduce the fluid tangentially with respect to the conduit.

In one embodiment, the method comprises orientating the secondary inlet introduce the fluid with a direction of flow component within the conduit.

In one embodiment, the method comprises providing a plurality of the secondary inlets.

In one embodiment, the method comprises locating the plurality of the secondary inlets circumferentially around the conduit.

In one embodiment, the fluid comprises at least one of the effluent stream and a secondary stream.

The invention is set out in the accompanying independent claim and the dependent claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 is a cross-section schematic through an abatement apparatus assembly according to one embodiment;
Figures 2A to 2C illustrate nozzles according to embodiments;
Figures 3A and 3B illustrate thread profiles according to embodiments;
Figure 4 illustrates the destructive rate efficiency (DRE) achieved by different configuration nozzles; and
Figures 5A and 5B illustrate a nozzle according to one embodiment.

### DESCRIPTION OF THE EMBODIMENTS

Before discussing the embodiments in any more detail, first an overview will be provided. Embodiments provide an abatement apparatus nozzle. The nozzle has an inlet, an outlet and a conduit. The inlet receives an effluent stream, which flows through the conduit from the inlet to the outlet. The nozzle has a rotator which rotates the effluent stream within a plane which is transverse to the direction of flow. In particular, the effluent stream is typically rotated into a vortex, in which the effluent stream rotates about an axis line extending between the inlet and the outlet, along the conduit. Accordingly, the rotator rotates the effluent stream as it passes through the nozzle, which delivers a rotating effluent stream into the treatment chamber. In some embodiments, the rotator comprises a structure placed within the conduit which interacts with the effluent stream as it flows through the conduit, typically by providing a surface extending into the conduit which interacts with the flow of the effluent stream and causes it to rotate. Embodiments also provide a fluid which is injected into the conduit and the interaction between that fluid and the effluent stream causes the effluent stream to rotate.

### Abatement Apparatus

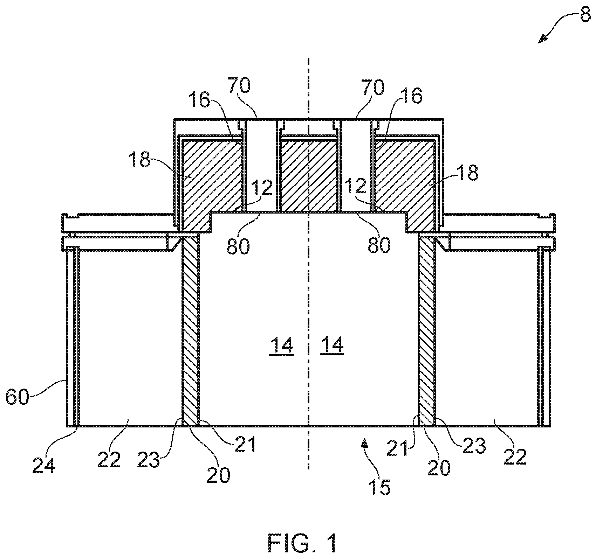

Figure 1 is a cross-section schematic through an abatement apparatus assembly, generally 8, according to one embodiment. The abatement apparatus assembly 8 treats an effluent gas stream pumped from a manufacturing process tool such as a semiconductor or flat panel display process tool, typically by means of a vacuum-pumping system. The effluent stream is received at an inlet 70 of a nozzle 12. The effluent stream is conveyed from the inlet 70 of the nozzle 12 to an outlet 80 of the nozzle 12 and injected into a cylindrical treatment chamber 14. **In** this embodiment, the abatement apparatus assembly 8 comprises four nozzles 12 arranged circumferentially, each conveying an effluent gas stream pumped from a respective tool by a respective vacuum-pumping system. Alternatively, the effluent stream from a single process tool may be split into a plurality of streams, each one of which is conveyed to a respective nozzle 12. Each nozzle 12 is located within a respective bore 16 formed in a ceramic top plate 18 which defines an upper or inlet surface of the treatment chamber 14.

The treatment chamber 14 has side walls defined by an exit surface 21 of a foraminous sleeve 20 in the form of a cylindrical tube. A plenum volume 22 is defined between an entry surface 23 of the foraminous sleeve 20 and a cylindrical outer shell 24. The cylindrical outer shell 24 is concentrically enclosed within an outer insulating sleeve 60 in order to reduce the outer surface temperature to safe levels should the temperature of the cylindrical outer shell 24 become raised due to, for example, stray heating. Additional, or alternatively, a cooler may be located within or against the outer shell in order to provide cooling.

A gas is introduced into the plenum volume 22 via an inlet nozzle (not shown). The gas may be air and a flammable gas mixture (such as a hydrocarbon, for example methane), or a blend of air and flammable gas mixture together with other species such as water vapour, CO₂. The gas is introduced and passes from the entry surface 23 to the exit surface 21 of the foraminous sleeve 20 where it combusts to heat the treatment chamber 14.

### Nozzles

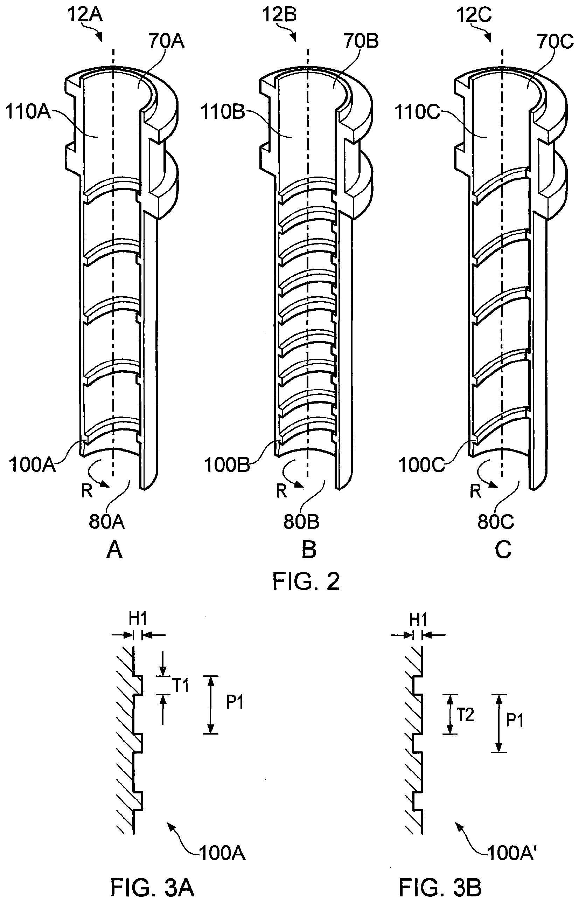

Figures 2A to 2C are sectional views illustrating nozzles according to embodiments. **In** these embodiments, each nozzle 12A-12C has an internal diameter of 16 millimetres and an axial length of 76 millimetres.

As can be seen in Figure 2A, a single-start thread 100A is provided on an interior surface 110A of the nozzle 12A. **In** operation, the effluent stream is introduced through the inlet 70A and travels towards the outlet 80A. As the effluent passes through the nozzle 12A, the presence of the thread 100A causes the effluent stream to begin to rotate circumferentially within the nozzle 12A in the direction R, about the elongate axis of the nozzle 12A. **In** other words, the effluent stream interacts with the upstream surfaces of the thread 100A. This interaction imparts a rotational component R about a centre axis of the nozzle 12A. A rotating effluent stream, typically in the form of a vortex then enters the treatment chamber 14.

As can be seen in Figure 2B, a single-start thread 100B is provided on an interior surface 110B of the nozzle 12B. The nozzle 12B has a thread 100B which is similar in cross-section to thread 100A, but has a finer pitch. That is to say, there are more turns per axial length of the nozzle 12B compared to that of nozzle 12A. **In** particular, nozzle 12B has nine turns compared to nozzle 12A which has five turns. **In** operation, the effluent stream is introduced through the inlet 70B and travels towards the outlet 80B. As the effluent passes through the nozzle 12B, the presence of the thread 100B causes the effluent stream to begin to rotate circumferentially within the nozzle 12B in the direction R, about the elongate axis of the nozzle 12B. **In** other words, the effluent stream interacts with the upstream surfaces of the thread 100B. This interaction imparts a rotational component R about a centre axis of the nozzle 12B. A rotating effluent stream, typically in the form of a vortex then enters the treatment chamber 14.

As can be seen in Figure 2C, a single-start thread 100C is provided on an interior surface 110C of the nozzle 12C. Nozzle 12C has a thread 100C whose cross-section is similar to that of 100A, but the thread in this embodiment is a double-start thread which has a coarser pitch compared to that of Figure 2A. That is to say, for each of the two threads, there are fewer turns per axial length of the nozzle 12C compared to that of nozzle 12A. **In** operation, the effluent stream is introduced through the inlet 70C and travels towards the outlet 80C. As the effluent passes through the nozzle 12C, the presence of the thread 100C causes the effluent stream to begin to rotate circumferentially within the nozzle 12C in the direction R, about the elongate axis of the nozzle 12C. **In** other words, the effluent stream interacts with the upstream surfaces of the thread 100B. This interaction imparts a rotational component R about a centre axis of the nozzle 12B. A rotating effluent stream, typically in the form of a vortex then enters the treatment chamber 14.

### Thread Profiles

Figures 3A and 3B illustrate thread profiles according to embodiments. As shown in Figure 3A, the height H1 of the thread 100A is 2 millimetres, its width T1 is 2 millimetres and it has a pitch P1 between threads. However, for this size of nozzle, the height and width is selected typically in the range of 1 to 3 millimetres. Although not illustrated in Figure 3A, the edges of the thread 100A is rounded. Also, as shown in Figure 3B, it will be appreciated that the profile of the thread 100A may be reversed, with the thread 100A' instead protruding into the thickness of the nozzle wall itself. As shown in Figure 3B, it has the height H1, it has a width T2 and it has the pitch P1 between threads.

### Destructive Rate Efficiency

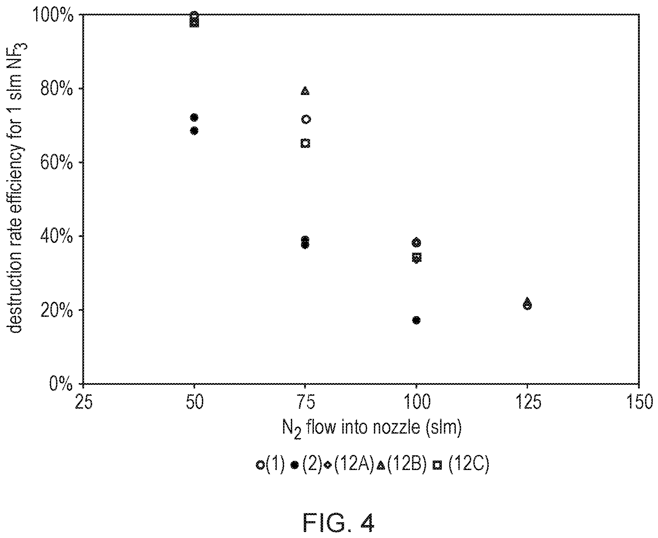

Figure 4 illustrates the destructive rate efficiency (DRE) achieved by different configuration nozzles.

Results (1) show the destruction rate efficiency at different rates of effluent stream using an existing inlet nozzle arrangement which has a dog-leg portion, such as that illustrated in EP 2 989 387 A1.

Results (2) show the destruction rate efficiency for a straight nozzle, such as that illustrated in Figure 1, which omits the thread on the inner surface. As can be seen, the DRE for such a straight nozzle drops compared to that of the existing nozzle.

Results (12C) show the DRE for the nozzle 12C. As can be seen, the DRE of such a nozzle improves compared to that of a straight nozzle with no thread on the inner surface.

Results (12A) show the DRE of the nozzle 12A. As can be seen, the DRE of nozzle 12A is improved compared to that of nozzle 12C.

Results (12B) show the performance of the nozzle 12B. As can be seen, the DRE matches or exceeds that of the existing nozzle and avoids the problems of powder or debris gathering in the dog-leg.

### Fluid Rotator

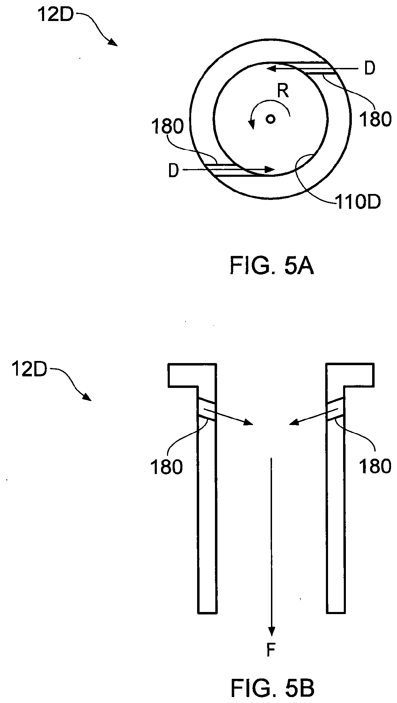

Figures 5A and 5B illustrate a nozzle 12D according to one embodiment. Figure 5A is an end sectional view. Figure 5B is a side sectional view. In this embodiment, one or more circumferentially located openings 180 are provided in the wall of the nozzle 12D. The openings 180 are orientated to introduce a fluid stream into the nozzle 12D to interact with the flow of the effluent stream through the nozzle 12D. In particular, the openings 180 are arranged to inject the fluid in a direction which has a flow component which is transverse to the direction of flow of the effluent stream. As can be seen in Figure 5A, typically, each opening 80 is orientated to inject the fluid in a direction D which is tangential to the inner surface 110D of the nozzle 12D. The introduction of the fluid interacts with the effluent stream to cause the effluent stream to rotate in the direction R about the central axis of the nozzle 12D in a similar manner to that described above. However, an advantage of this arrangement is that the need for the threads 100A to 100C is obviated, which reduces the possibility of debris gathering within the nozzle 12D. As can be seen in Figure 5B, the openings 180 are tilted to provide a flow component which is in the direction of flow F of the effluent stream. In other words, the openings 180 are tilted to move the fluid at least partially in the direction of flow of the effluent stream. This helps to provide a stable vortex. Accordingly, embodiments provide a modification to a straight through nozzle arrangement which enhances abatement performance. Embodiments seek to expand the useful range of operation of these nozzles to lower flow rates.

In embodiments, a nozzle is constructed from a heat and chemically-resistant metal alloy, for example ANC16. According to the invention, the nozzle is formed by a casting process, for example lost wax casting. In one embodiment, at least one helical vane, protruding from the inner wall of the nozzle extends at least partially in the direction of the flow axis. It is found that the abatement performance of a gas such as NF₃ is very much improved by this feature. The improvement is significantly greater than that obtained by reducing the nozzle diameter to that of the narrowest dimension of the vane, indicating that a swirl is introduced into the gas by the vane, thereby improving performance. Embodiments deliberately induce a swirl in the incoming process gas. Variations include the pitch and number of starts of the helix, also the depth i.e. the protrusion of the helix into the gas stream. Such nozzles may be used with all radiant burner products, including induction-heated and gas-fired burners.

Although illustrative embodiments of the invention have been disclosed in detail herein, with reference to the accompanying drawings, it is understood that the invention is not limited to the precise embodiment and that various changes and modifications can be effected therein by one skilled in the art without departing from the scope of the invention as defined by the appended claims **.**

### REFERENCE SIGNS

abatement apparatus assembly 8
nozzle 12; 12A-D
treatment chamber 14
bore 16
top plate 18
foraminous sleeve 20
exit surface 21
plenum volume 22
entry surface 23
outer shell 24
insulating sleeve 60
inlet 70; 70A-C
outlet 80; 80A-C
thread 100A-C; 100A'
interior surface 110A-D
openings 180
height H1
width T1, T2
pitch P1
direction D
direction R
direction of flow F

## Claims

1. A nozzle (12) for a combustion_abatement apparatus operable to treat an effluent stream from a processing tool, said nozzle, formed by a casting process, and comprising:
a nozzle body defining
a nozzle inlet (70) operable to receive said effluent stream,
a nozzle outlet (80), and
a conduit extending between said nozzle inlet and said nozzle outlet and operable to convey said effluent stream in a direction of flow from said nozzle inlet to said nozzle outlet; and
an effluent stream rotator (100A-C ) configured to impart a rotational component to said effluent stream to rotate said effluent stream around said direction of flow, wherein said effluent stream rotator comprises an elongate helical protruding structure upstanding from, and extending along, a surface of said conduit and wherein said conduit has a radius R and said protruding structure has an upstanding height into said conduit of between around 1/16 R and 3/16 R, and typically 1/8 R.

2. The nozzle of claim 1, wherein said effluent stream rotator (100A-C ) is configured to rotate said effluent stream about a flow axis defined by said direction of flow.

3. The nozzle of claim 1 or 2, wherein said effluent stream rotator (100A-C ) is configured to rotate said effluent stream into a vortex.

4. The nozzle of any preceding claim, comprising a plurality of said protruding structures.

5. The nozzle of claim 4, wherein said plurality of said protruding structures define a multi-start thread arrangement.

6. The nozzle of any preceding claim, wherein said effluent stream rotator comprises at least one secondary inlet located to convey a fluid to impart said rotational component to said effluent stream.

7. The nozzle of claim 6, wherein said secondary inlet is orientated introduce said fluid with a tangential component within said conduit.

8. The nozzle of claim 6 or 7, wherein said secondary inlet is orientated introduce said fluid tangentially with respect to said conduit.

9. The nozzle of any one of claims 6 to 8, wherein said secondary inlet is orientated introduce said fluid with a direction of flow component in the direction of flow (F) of the effluent stream, in use, within said conduit.

10. The nozzle of any one of claims 6 to 9, comprising a plurality of said secondary inlets.

11. The nozzle of claim 10, wherein said plurality of said secondary inlets are located circumferentially around said conduit.

## Patentansprüche

1. Düse (12) für eine Verbrennungsreduktionsvorrichtung, betreibbar zum Aufbereiten eines Abgasstroms von einem Verarbeitungswerkzeug, wobei die Düse durch einen Gießprozess gebildet ist und Folgendes umfasst:
einen Düsenkörper, der Folgendes definiert:
einen Düseneinlass (70), betreibbar zum Aufnehmen des Abgasstroms,
einen Düsenauslass (80), und
eine Leitung, die sich zwischen dem Düseneinlass und dem Düsenauslass erstreckt und dazu betreibbar ist, den Abgasstrom in einer Strömungsrichtung von dem Düseneinlass zu dem Düsenauslass zu übertragen; und
einen Abgasstromrotator (100A-C), dazu ausgestaltet, eine drehende Komponente auf den Abgasstrom einwirken zu lassen, um den Abgasstrom um die Strömungsrichtung zu drehen, wobei der Abgasstromrotator eine langgezogene, spiralförmige, vorstehende Struktur umfasst, die von einer Oberfläche der Leitung hervorragt und sich entlang dieser erstreckt, wobei die Leitung einen Radius R aufweist und die vorstehende Struktur eine in die Leitung hervorragende Höhe zwischen 1/16 R und 3/16 R, typischerweise 1/8 R, aufweist.

2. Düse nach Anspruch 1, wobei der Abgasstromrotator (100A-C) dazu ausgestaltet ist, den Abgasstrom um eine durch die Strömungsrichtung definierte Strömungsachse zu drehen.

3. Düse nach Anspruch 1 oder 2, wobei der Abgasstromrotator (100A-C) dazu ausgestaltet ist, den Abgasstrom in einen Wirbel zu drehen.

4. Düse nach einem der vorhergehenden Ansprüche, umfassend eine Vielzahl der vorstehenden Strukturen.

5. Düse nach Anspruch 4, wobei die Vielzahl der vorstehenden Strukturen eine mehrgängige Gewindeanordnung definiert.

6. Düse nach einem der vorhergehenden Ansprüche, wobei der Abgasstromrotator mindestens einen sekundären Einlass, angeordnet zum Übertragen eines Fluides, um mit der Drehkomponente auf den Abgasstrom einzuwirken, umfasst.

7. Düse nach Anspruch 6, wobei der sekundäre Einlass dazu ausgerichtet ist, das Fluid mit einer Tangentialkomponente innerhalb der Leitung einzuleiten.

8. Düse nach Anspruch 6 oder 7, wobei der sekundäre Einlass dazu ausgerichtet ist, das Fluid in Bezug auf die Leitung tangential einzuleiten.

9. Düse nach einem der Ansprüche 6 bis 8, wobei der sekundäre Einlass dazu ausgerichtet ist, das Fluid im Gebrauch innerhalb der Leitung mit einer Strömungsrichtungskomponente in der Strömungsrichtung (F) des Abgasstroms einzuleiten.

10. Düse nach einem der Ansprüche 6 bis 9, umfassend eine Vielzahl von sekundären Einlässen.

11. Düse nach Anspruch 10, wobei die Vielzahl von sekundären Einlässen umlaufend um die Leitung angeordnet sind.

## Revendications

1. Buse (12) pour un appareil de réduction de la combustion apte à traiter un flux d'effluent provenant d'un outil de traitement, ladite buse étant formée par un procédé de moulage, et comprenant :
un corps de buse définissant
une entrée de buse (70) apte à recevoir ledit flux d'effluent,
une sortie de buse (80), et
un conduit s'étendant entre ladite entrée de buse et ladite sortie de buse et apte à transporter ledit flux d'effluent dans une direction d'écoulement depuis ladite entrée de buse vers ladite sortie de buse ; et
un rotateur de flux d'effluent (100A-C) configuré pour conférer une composante de rotation audit flux d'effluent pour faire tourner ledit flux d'effluent autour de ladite direction d'écoulement,
dans laquelle ledit rotateur de flux d'effluent comprend une structure hélicoïdale allongée en saillie, dressée depuis une surface dudit conduit et s'étendant le long de celle-ci, et dans laquelle ledit conduit a un rayon R et ladite structure en saillie a une hauteur verticale dans ledit conduit comprise entre environ 1/16 R et 3/16 R, et typiquement 1/8 R.

2. Buse selon la revendication 1, dans laquelle ledit rotateur de flux d'effluent (100A-C) est configuré pour faire tourner ledit flux d'effluent autour d'un axe d'écoulement défini par ladite direction d'écoulement.

3. Buse selon la revendication 1 ou 2, dans laquelle ledit rotateur de flux d'effluent (100A-C) est configuré pour faire tourner ledit flux d'effluent en un vortex.

4. Buse selon l'une quelconque des revendications précédentes, comprenant une pluralité desdites structures en saillie.

5. Buse selon la revendication 4, dans laquelle ladite pluralité de structures en saillie définissent un agencement de filetage à plusieurs filets.

6. Buse selon l'une quelconque des revendications précédentes, dans laquelle ledit rotateur de flux d'effluent comprend au moins une entrée secondaire située pour transporter un fluide afin de conférer ladite composante de rotation audit flux d'effluent.

7. Buse selon la revendication 6, dans laquelle ladite entrée secondaire est orientée pour introduire ledit fluide avec une composante tangentielle à l'intérieur dudit conduit.

8. Buse selon la revendication 6 ou 7, dans laquelle ladite entrée secondaire est orientée pour introduire ledit fluide tangentiellement par rapport audit conduit.

9. Buse selon l'une quelconque des revendications 6 à 8, dans laquelle ladite entrée secondaire est orientée pour introduire ledit fluide avec une composante de direction d'écoulement dans la direction d'écoulement (F) du flux d'effluent, en utilisation, à l'intérieur dudit conduit.

10. Buse selon l'une quelconque des revendications 6 à 9, comprenant une pluralité desdites entrées secondaires.

11. Buse selon la revendication 10, dans laquelle ladite pluralité d'entrées secondaires sont situées circonférentiellement autour dudit conduit.
